**Europäisches Patentamt**

**European Patent Office**

**Office européen des brevets**

(19)

(11) Veröffentlichungsnummer : **0 185 855
B1**

(12)　　　　　　　　　　　**EUROPÄISCHE PATENTSCHRIFT**

(45) Veröffentlichungstag der Patentschrift :
26.04.89

(51) Int. Cl.⁴ : **B 60 K　5/12, F 16 F 13/00**

(21) Anmeldenummer : 85111942.0 ·

(22) Anmeldetag : 20.09.85

(54) Zweikammer-Motorlager.

(30) Priorität : 21.12.84 DE 3446725

(43) Veröffentlichungstag der Anmeldung :
02.07.86 Patentblatt 86/27

(45) Bekanntmachung des Hinweises auf die Patenterteilung : 26.04.89 Patentblatt 89/17

(84) Benannte Vertragsstaaten :
DE FR GB IT SE

(56) Entgegenhaltungen :
DE–A– 2 727 244
DE–A– 3 239 787
DE–A– 3 340 153
US–A– 2 387 066

(73) Patentinhaber : AUDI AG
Postfach 220
D-8070 Ingolstadt (DE)

Boge A.G.
Bogestrasse 50
D-5208 Eitorf/Sieg (DE)

(72) Erfinder : Hollerweger, Heinz, Dipl.-Ing.
Effnerstrasse 20
D-8070 Ingolstadt (DE)
Erfinder : van den Boom, Johannes, Dipl.-Ing.
Marie-Luise-Fleisser-Strasse 16
D-8073 Kösching (DE)
Erfinder : Kuipers, Geert, Dipl.-Ing.
Am Kirchenweg 1a
D-8070 Ingolstadt-Oberhaunstadt (DE)
Erfinder : Salewsky, Gert, Masch.-Ing.
Schubertstrasse 2
D-8071 Lenting (DE)
Erfinder : Aden, Bodo, Dipl.-Ing.
Hauptstrasse 17
D-8069 Königsfeld (DE)
Erfinder : Reuter, Horst, Dipl.-Ing.
Am Sonnenhang 9
D-5307 Wachtberg-Oberbachem (DE)

(74) Vertreter : Le Vrang, Klaus
AUDI AG Postfach 220 Patentabteilung I/EQP
D-8070 Ingolstadt (DE)

EP 0 185 855 B1

Jouve, 18, rue St-Denis, 75001 Paris, France

**Beschreibung**

Die Erfindung bezieht sich auf ein Zweikammer-Motorlager gemäß dem Oberbegriff des Anspruchs 1.

Ein derartiges Lager ist aus der DE-A-33 40 153 bekannt. Dieses bekannte Lager kann gesteuert seine Lagereigenschaften ändern. Ist eine weiche Lagercharakteristik erwünscht, wird bei dem bekannten Lager die Überströmöffnung zwischen den beiden fluidgefüllten Kammern vergrößert, so daß das Lager in seiner Gesamtcharakteristik sehr weich wird, sind härtere Lagereigenschaften gewünscht, wird die Überströmöffnung verkleinert, so daß das Lager härter wird.

Die notwendigen Einbauten zum Vergrößern bzw. Verkleinern der Überströmöffnung sind verhältnismäßig kompliziert und störanfällig.

Aufgabe der Erfindung ist es, ein gattungsgemäßes Motorlager zu schaffen, das einen einfacheren Aufbau besitzt.

Die Aufgabe wird gelöst gemäß dem Hauptanspruch 1.

Das erfindungsgemäße Motorlager hat einerseits eine gewünschte weiche Abstimmung, kann jedoch andererseits nicht durchschlagen bei Lastwechselvorgängen und beim Abstellen des Motors bei Drehzahlen kleiner als ca. 1 300 Umdrehungen/Minute. In diesem Fall ist eine harte Motorlagerung notwendig.

Das erfindungsgemäße Motorlager kann zur Erzielung dieser Eigenschaften von hart auf weich und umgekehrt umgeschaltet werden, und zwar durch die unterschiedliche Ausdehnung eines Zwischenraumes, der hinter einer nachgiebigen Wand der einen Kammer angeordnet ist. Ist eine geringe Steifigkeit des Lagers gewünscht, wird dieser Zwischenraum mit einem Fluid, beispielsweise Luft ausgefüllt, so daß die in ihrer Steifigkeit veränderbare Wand, die im wesentlichen aus einem elastischen oder doch zumindest nicht formsteifen Werkstoff besteht, unter Verdrängung des in dem Zwischenraum vorhandenen Fluids bewegt werden kann. Ist jedoch eine harte Federsteifigkeit erwünscht, wird sich die in ihrer Steifigkeit veränderbare Wand an einen Anschlag anlegen, so daß sie nunmehr nicht weiter nachgeben kann, sondern von hoher Steifigkeit ist. Dadurch ist das Volumen dieser Kammer nicht mehr dadurch veränderbar, daß die Wand weiter nachgibt, das Lager hat steife Eigenschaften.

Vorteilhafte Ausgestaltungen der Erfindung sind in den Unteransprüchen beschrieben. Unteranspruch 2 beschreibt eine Ausführungsform, bei der die in ihrer Steifigkeit veränderbare Wand ringförmig um die Kammer läuft, so daß ein verhältnismäßig großer Bereich durch die in ihrer Steifigkeit nachgiebige Wand gebildet wird. Gleichzeitig kann bei ringförmigem Umlauf die Wand verhältnismäßig nachgiebig gehalten werden, obwohl das Lager weiter selbsttragend bleibt. Da eine Vergrößerung des Volumens eine Aufweitung entlang des Gesamtumfanges dieser beweglichen Wand bedeuten würde, wären dazu verhältnismäßig große Kräfte notwendig.

Unteranspruch 3 beschreibt eine in ihrem Aufbau einfache Ausführungsform, bei der der Zwischenraum durch einen Gummischlauch gebildet wird. Dieser Gummischlauch kann, wie in Unteranspruch 4 beschrieben, mit Unterdruck beaufschlagt werden, wodurch die nachgiebige Wand an einen Anschlag gezogen wird und damit einem weiteren Druck der in der Kammer enthaltenen Lagerflüssigkeit bzw. des Lagerfluids nicht mehr weiter nachgeben kann.

Unteranspruch 5 schließlich beschreibt eine Ausführungsform, bei der der Unterdruck über ein Ventil dem Zwischenraum zugeführt wird, wobei das Ventil drehzahlabhängig gesteuert wird. Damit kann die Charakteristik des Lagers gezielt abhängig von der Motordrehzahl beeinflußt werden.

Im folgenden wird die Erfindung anhand der Figuren deutlicher beschrieben. Es zeigen :

Fig. 1 ein schematisches Schaltbild, und

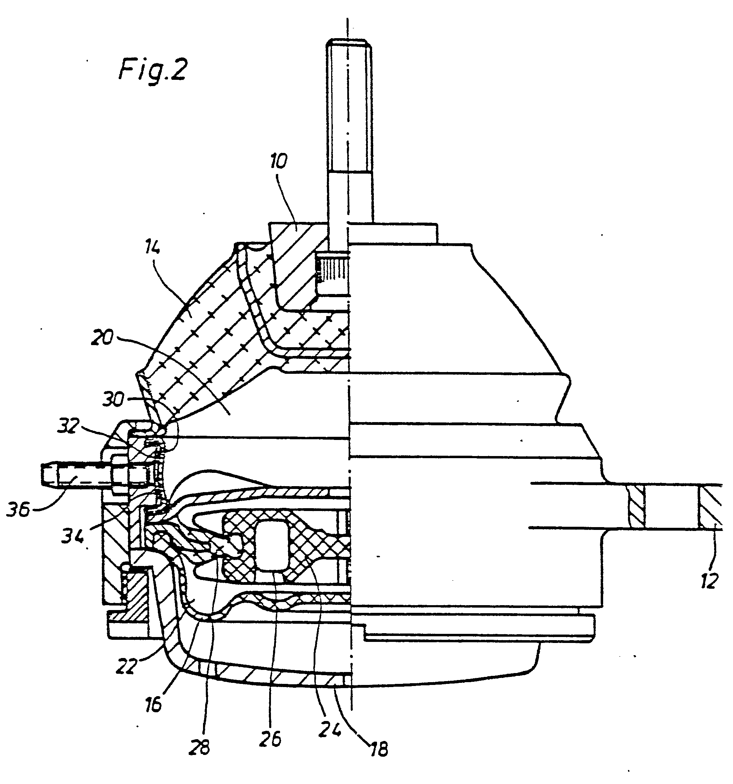

Fig. 2 eine teilweise geschnittene Ansicht des erfindungsgemäßen Lagers.

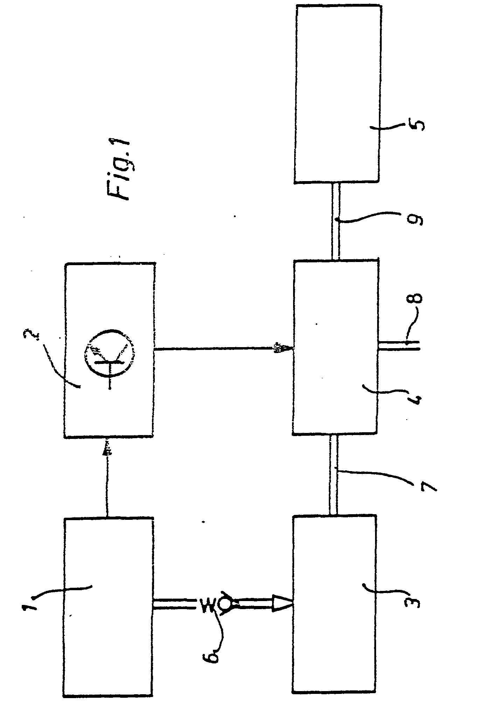

In Fig. 1 ist mit dem Bezugszeichen 1 der Fahrzeugmotor bezeichnet, der eine Drehzahlinformation an einen Drehzahlschalter 2 abgibt. Über ein Rückschlagventil 6 ist der Fahrzeugmotor 1 mit einem Speicher 5 verbunden, der Unterdruck speichert. Das Dämpferlager 5 ist über ein Ventil 4 wahlweise an eine Leitung 8, die mit Umgebungsdruck beaufschlagt ist, oder aber über eine Leitung 7 mit dem Unterdruckspeicher verbunden. Die beiden unterschiedlichen Stellungen des Ventils 4 verbinden einmal die Leitung 7 mit der Leitung 9 und damit mit dem Dämpferlager 5, oder aber die Leitung 8 mit der Leitung 9 und damit mit dem Dämpferlager 5. Die Stellung des Ventils 4 wird über den Drehzahlschäter 2 geändert.

Das erfindungsgemäße Lager besitzt einen Lagerkern 10 und ein Widerlager 12, die über einen Gummitragkörper 14 miteinander verbunden sind. Durch den Lagerkern 10 und den Gummitragkörper 14 sowie eine nachgiebige Wand 16, beispielsweise aus Gummi, wird ein Volumen eingeschlossen, das fluidgefüllt, vorzugsweise flüssigkeitsgefüllt ist. Eine untere Abdeckkappe 18 schützt die bewegliche Wand 16 vor Beschädigungen.

Das Innere des vom Gummitragkörper 14, dem Lagerkern 10 und der beweglichen Wand 16 sowie einer umlaufenden Wand 30 eingeschlossene Volumen ist durch eine Trennwand 24 in zwei Kammern 20 und 22 aufgeteilt. Die Trennwand 24 besitzt eine Durchströmöffnung 26, so daß bei Verkleinerung des Volumens der Kammer 20 Flüssigkeit in die Kammer 22 überströmen kann. Gleichzeitig ist die Trennwand 24 elastisch mit der Aufhängung 28 aufgehängt, die bei kleineren Auslenkungen der Trennwand die Trennwand leicht beweglich macht, während bei größeren Auslenkungen die Trennwand an einen Anschlag gerät. Somit besitzt bei kleineren Amplituden das Lager eine weiche Charakteristik, um dann, wenn die Trennwand 24 an den Anschlag gerät, hart zu werden.

Das Lager hat also bei großen Amplituden harte Lagereigenschaften, bei kleinen Amplituden weiche Lagereigenschaften. Es gibt jedoch Betriebszustände, bei denen auch bei größeren Amplituden weiche Lagereigenschaften erwünscht sind. Dies trifft insbesondere bei höheren Drehzahlen zu.

Zu diesem Zweck besitzt die Kammer 20 ringförmig umlaufend eine nachgiebige Wand 30, hinter der sich ein Zwischenraum 32 in der Art eines Luftpolsters befindet. Dahinter ist parallel umlaufend zur nachgiebigen Wand 30 eine Metallwand 34 vorgesehen, an die Wand 30 zum Anschlag kommen kann.

Der Zwischenraum 32 ist über einen Stutzen 36 be- und entlüftbar, der Stutzen 36 wird an die Leitung 9, wie sie in Fig. 1 dargestellt ist, angeschlossen.

Die Wirkungsweise dieses Lagers ist folgende : Sind weiche Lagereigenschaften erwünscht, wird das Ventil 4 so eingestellt, daß die Leitung 9 mit der Leitung 8 verbunden ist, dadurch stellt sich im Zwischenraum 32 Umgebungsluftdruck ein, so daß der Zwischenraum 32 ein Luftpolster zwischen der nachgiebigen Wand 30 und dem Anschlag 34 bildet. Treten nun in der Kammer 20 aufgrund der Einleitung von Stößen über den Lagerkern 10 Volumenänderungen auf, können diese, wenn die nachgiebige Trennwand 24 nicht weiter nachgeben kann, durch ein Nachgeben der Wand 30 ausgeglichen werden. Auch größere Amplituden können auf diese Weise aufgefangen werden.

Wird jedoch die Leitung 7 mit der Leitung 9 verbunden, gelangt der im Speicher 3 enthaltene Unterdruck in den Zwischenraum 32, wodurch die nachgiebige Wand 30 an die metallene, umlaufende Wand 34 zur Anlage kommt, wodurch die Wand 34 einen Anschlag für die Wand 30 bildet. In diesem Augenblick kann die Wand 30 bei weiteren Stößen nicht mehr nachgeben, da sie ja bereits am Anschlag anliegt. Werden nunmehr Stöße größerer Amplitude über den Lagerkern 10 und den Gummitragkörper 14 auf das Volumen 20 eingeleitet, kann in einem begrenzten Umfange die Trennwand 24 zwischen den Kammern 20 und 22 nachgeben. Gelangt diese jedoch an ihren Anschlag, ist eine weitere Volumenvergrößerung der Kammer 20 nicht mehr möglich, denn die in ihrer Steifigkeit veränderliche Wand 30 ist ja bereits am Anschlag und kann dementsprechend nicht mehr ausweichen. Damit wird das Lager, sobald die Trennwand 34 an ihren Anschlag kommt, schlagartig hart.

Erfindungsgemäß läßt sich also durch die Beaufschlagung mit Unterdruck oder Umgebungsdruck, die beide als Größen ohne weiteres zur Verfügung stehen, das Lager in seiner Dämpfungscharakteristik einstellen.

## Patentansprüche

1. Zweikammer-Motorlager (5) mit fluidgefüllten Kammern (20, 22) und einer die Kammern trennenden, begrenzt auslenkbaren Membran (24) mit mindestens einer Überströmöffnung (26), wobei die Lagercharakteristik veränderbar ist, dadurch gekennzeichnet, daß die eine Kammer (20) eine in ihrer Steifigkeit veränderbare Wand (30) aufweist, die bei geringer Steifigkeit durch einen Zwischenraum (32) von einem Anschlag (34) beabstandet ist und bei hoher Steifigkeit zumindest teilweise in Anlage an den Anschlag (34) kommt.

2. Zweikammerlager nach Anspruch 1, dadurch gekennzeichnet, daß die in ihrer Steifigkeit veränderbare Wand (30) ringförmig umlaufend die Kammer (20) umgibt.

3. Zweikammerlager nach Anspruch 2, dadurch gekennzeichnet, daß der Zwischenraum (32) durch einen Gummischlauch gebildet wird.

4. Zweikammer-Motorlager nach einem der Ansprüche 1 bis 3, dadurch gekennzeichnet, daß der Zwischenraum (32) mit Unterdruck beaufschlagbar ist, um die veränderbare Wand (30) in ihre Stellung anliegend an den Anschlag (34) zu bringen.

5. Zweikammermotorlager nach Anspruch 4, dadurch gekennzeichnet, daß der Unterdruck über ein Ventil (4) dem Zwischenraum (32) zugeführt wird, das drehzahlabhängig (2) gesteuert wird.

## Claims

1. Twin-chamber engine mount (5) with fluidfilled chambers (20, 22) and a diaphragm (24), which separates the chambers and has limited deflection, with at least one overflow opening (26), the support characteristics being changeable, characterized in that the chamber (20) has a wall (30) of changeable stiffness, which at low stiffness is separated from a stop (34) by an intermediate space (32) and at high stiffness is at least partially seated against the stop (34).

2. Twin-chamber mount according to Claim 1, characterized in that the wall (30) of changeable stiffness surrounds the chamber (20) in the form of an encircling annulus.

3. Twin-chamber mount according to Claim 2, characterized in that the intermediate space (32) is formed by a rubber tube.

4. Twin-chamber engine mount according to one of Claims 1 to 3, characterized in that a vacuum can be admitted to the intermediate space (32) in order to bring the changeable wall (30) into its position seated against the stop (34).

5. Twin-chamber engine mount according to Claim 4, characterized in that the vacuum is supplied to the intermediate space (32) via a valve (4) which is controlled as a function of rotational speed (2).

## Revendications

1. Support moteur a deux chambres (5) comprenant des chambres (20, 22) remplies de fluide et une membrane (24) à déformation limitée séparant les chambres, avec au moins un orifice de décharge (26), la caractéristique de support étant modifiable, caractérisé en ce que l'une des chambres (20) présente une paroi (30) à rigidité modifiable maintenue à distance d'une butée (34) au moyen d'un espace intermédiaire (32) en cas de faible rigidité et venant partiellement en appui sur la butée (34) en cas d'une rigidité plus élevée.

2. Support à deux chambres selon la revendication 1, caractérisé en ce que la paroi (30) à rigidité modifiable entoure la chambre (20) en une forme annulaire.

3. Support à deux chambres selon la revendication 2, caractérisé en ce que l'espace intermédiaire (32) est formé par un tuyau en caoutchouc.

4. Support moteur à deux chambres selon l'une des revendications 1 à 3, caractérisé en ce que l'espace intermédiaire (32) peut être soumis à une dépression pour amener la paroi modifiable (30) en une position d'appui sur la butée (34).

5. Support moteur à deux chambres selon la revendication 4, caractérisé en ce que la dépression est amenée à l'espace intermédiaire (32) par une valve (4) commandée en fonction de la vitesse de rotation (2).

Fig.1

EP 0 185 855 B1

Fig.2